# EUROPEAN PATENT SPECIFICATION

(11) **EP 1 827 044 B1**
(45) Date of publication and mention of the grant of the patent: **11.06.2014**
(21) Application number: 06003932.8
(22) Date of filing: 27.02.2006
(51) Int. Cl.: H04W 4/02, H04M 15/00

(54) **Method for determining if a multi mode mobile station is located in a homezone**
Verfahren zur Bestimmung ob sich ein multimodefähiges Mobilendgerät in einer Heimatzone aufhält
Procédé de détermination de la position d' une station mobile multimode dans une zone de base

(43) Date of publication of application: 29.08.2007
(73) Proprietor: Telefónica Germany GmbH & Co. OHG, 80992 München (DE)
(72) Inventor: Blaschke, Bernd, 81547 München (DE); Marsden, Roger, 81737 München (DE)
(74) Representative: Herrmann, Uwe

(56) References cited:
- WO-A-01/35683
- WO-A-99/20064
- WO-A-02/063900
- WO-A-03/045100
- US-B1- 6 377 804

## Description

The present invention relates to a method of operating a telecommunications system and to a telecommunications system having means for the operating of a method of this type.

It is known to design the utilization of mobile telephone networks such that the calls are billed in dependence on location. Telecommunications systems exist, for example, in which the option exists for the users to have one or more subscriber regions set up individually per user out of which and/or into which a call is subject to a more favorable billing than outside the subscription regions. It is, for example, possible in this manner for a user of the telecommunications system to have a subscriber region set up around his residence or his office from which he can make mobile telephone calls particularly favorably. If the user is located inside one of the subscriber regions defined for him, provision can furthermore be made for this to be displayed to him by means of a suitable icon on the display of his mobile device, for example, or in another manner.

The reduced rate billing and/or the availability or modification of a service when using the mobile device inside the subscriber region is carried out on the basis of the finding that the radio cell responsible for the communication from and to the mobile device at least at the start of the call is located inside the subscriber region.

Within the framework of the spread of new communications standards such as UMTS, the case can occur that admittedly no UMTS cell is originally provided which covers a zone disposed inside the subscriber region, but that this situation can occur in the course of the further expansion of the network. If the mobile devices can be operated in different communications standards such as in GSM and UMTS, provision can be made for the communication to take place by UMTS in those regions in which only UMTS is available or in which both communications standards (GSM and UMTS) are available. If a UMTS cell has a coverage which projects into the subscriber region of the user, but is not located inside the subscriber region, this can have the result that the user is admittedly located inside his subscriber region, but is neither billed in accordance with the associated more favorable tariff nor the service alternatively the modified service is available.

This state is not desirable for the affected user. Accordingly, it is the object of the invention to ensure that a user located inside his subscriber zone receives the associated service or a specific associated billing irrespective of whether a radio cell of another communications standard not belonging to the subscriber region covers the subscriber region in parts.

WO 0135683 A1 discloses a wireless communication network having a dynamic location based zone assignment. It is the object of the present invention to ensure that a user located inside his subscriber zone receives the associated service or a specific associated billing irrespective of whether a radio cell of another communications standard not belonging to the subscriber region covers the subscriber region in parts.

This object is solved by the subject matter of the independent claims.

Preferred embodiments are provided by the dependent claims.

An aspect of the present invention comprises the steps of checking:
(a) whether the radio cell responsible for the communication is located inside the subscriber region;
(b) whether the radio cell responsible for the communication operates according to the second communications standard or according to a further communication standard;
(c) whether a radio cell is located inside the subscriber region which operates according to the second communications standard or according to a further communication standard; and
(d) whether the radio cell responsible for the communication is located inside an extended subscriber region which has a larger extent than the subscriber region at least in part.

These checking steps do not necessarily have to be carried out in the order recited here. Deviations from this are rather possible, as will be shown in more detail in the following.

It is, for example, conceivable that the step of checking whether the radio cell responsible for the communication operates according to a second communications standard or according to a further communications standard represents the first method step and that the method is already aborted at this point if it is found that the communication with the mobile device is being carried out in accordance with the first communications standard. If this is the case, the case of interest here does not apply that calls are being made inside one subscriber region via radio cells of another communications standard disposed outside the subscriber region even though the user is located inside his subscriber region.

It is also conceivable, for example, that the step of checking whether the radio cell responsible for the communication is located inside the subscriber region represents the first step of the method. If this check has a positive result, it is clear that the subscriber is located inside his subscriber region without any further checking steps having to be carried out.

The term "radio cell" used here and in the following can, on the one hand, represent a region in which the corresponding communications standard is available or, on the other hand, designate a radio station by means of which the communication from and/or to a mobile device is carried out which is being operated in the telecommunications system.

In an aspect of the invention, the checking steps (a) - (d) are run through in the order (a), (b), (c), (d) and the method is designed such
that it comprises a first check whether the radio cell responsible for the communication is disposed inside the subscriber region and makes the finding, if the result is positive, that the user is located inside the subscriber region
and, if the result of the first check is negative, provides for a second check whether the radio cell responsible for the communication is operating according to the second communications standard or according to a further communications standard which is a preferred communications standard which is selected when both the first and the second communications standards and/or a further communications standard are available and, if the result of the second check is negative, makes the finding that the user is located outside the subscriber region
and, if the result of the second check is positive, provides for a third check whether a radio cell operating according to the second communications standard or according to a further communications standard is present inside the subscriber region and, if the result of the check is positive, makes the finding that the user is located outside the subscriber region
and, if the result of the third check is negative, provides for a fourth check whether the radio cell responsible for the communication is located inside the extended subscriber region and, if the result of the fourth check is positive, makes the finding that the user is located inside the subscriber region.

If it is found as a result of the first check that the radio cell responsible for the communication is located inside the subscriber region, no further checking steps are required since it is then clear that the user is located inside its subscriber region and, for example, that a corresponding billing has to be carried out.

If, however, the radio cell responsible for the communication is not located inside the subscriber region, the check is made in a second checking step whether the communications standard with which the communication with the radio cell responsible for the communication is taking place is a preferred communications standard, such as UMTS, in which the communication takes place when two communications standards or more than two communications standards are available in one region. The decision as to with which communications standard the communication takes place when more than one communications standard is available can take place with respect to the individual user or generally to the effect that e.g. in regions in which a communication is possible according to the GSM standard and according to the UMTS standard, the communication always takes place according to the UMTS standard. The named preferred communications standard is the communications standard with which the communication takes place in these regions representing intersections.

It is pointed out at this point that the invention is not limited to the communications standards GSM and UMTS or generally to 2G and 3G standards, but rather covers any standards.

If it is found in the second check that the radio cell responsible for the communication is not operating according to a preferred standard, the decision is taken that the user is not located inside his subscriber region, but outside it. This case occurs, for example, when the communications standard operating in the second area is UMTS, but the communication with the mobile device is further processed using the GSM standard. Since it was already found in the first checking step that the radio cell is located outside the subscriber region, the finding can now be made that the user is not in his subscriber region.

If the second check ends with a positive result, i.e. if the communications standard with which the current communication is taking place is a preferred communications standard, a third checking step is made as to whether radio cells operating according to the preferred communications standard are located inside the subscriber region. If this is the case, the decision is made that the user is located outside his subscriber region since otherwise the communication would take place via a radio cell located inside the subscriber region.

If it is found that no radio cell operating according to the preferred communications standard is located in the subscriber region, a check is made whether the radio cell responsible for the current communication is located inside an extended subscriber region. If this is the case, the user is considered as if he were located inside his subscriber region, i.e. a corresponding billing occurs, for example.

It is feasible that the check is provided prior to the first check whether the call by means of the mobile device is taking place according to the first or second communications standards or according to the further communications standard and that no further check is made if it is found that the call is taking place by means of the first communications standards. If the call is being made by means of the first communications standard, for example GSM, the case is obviously not present that the telephone call is being held inside the subscriber region with a second communications standard or with a further communications standard, for example UMTS, so that no further checking steps are required.

Provision is made in a further embodiment for the method to run through the checking steps (a) - (d) in the order (b), (c), (a)/(d) and to be designed such that
it comprises a first check whether the radio cell responsible for the communication is a radio cell operating according to the second communications standard or according to the further communications standard and does not instigate any further checking steps if this is not the case
and, if the result of the first check is positive, provides for a second check whether a radio cell is located inside the subscriber region which operates according to the second communications standard or according to the further communications standard
and, if the result of the second check is positive, provides for a third check whether the radio cell responsible for the communication is located inside the subscriber region and, if the check is positive, makes the finding that the subscriber is located inside the subscriber region and, if the check is negative, makes the finding that the subscriber is located outside the subscriber region
and, if the result of the second check is negative, provides for a fourth check whether the radio cell responsible for the communication is located inside the extended subscriber region and, if the check is positive, makes the finding that the subscriber is located inside the subscriber region and, if the check is negative, makes the finding that the subscriber is located outside the subscriber region.

It can be prevented by using the method in accordance with the invention that the calls of a user are billed at a higher tariff than the tariff which applies inside a subscriber region although the user is located inside his subscriber region.

The extended subscriber region can, for example, be larger than the subscriber region by a fixed or by a non-fixed amount. It is conceivable that the subscriber region is defined by a circle which has the radius r and a specific location inside the first region as the center of the circle and that the extended subscriber region is likewise defined by a circle which has the same location as the subscriber region and a radius R which is larger than the radius r of the subscriber region by a fixed or variable amount.

The amount by which the extended subscriber region exceeds the subscriber region may be based on the range of the station or on the maximum size of the cells of the second or further communications standard. The amount should be preferably increased with the range of the station, i.e. with the size of the cell.

It is, for example, conceivable that the subscriber region is formed by a circle around the residence of the user which has a radius of 2 km and that the extended subscriber region is formed by a concentric circle with an enlarged radius, for example of 5 km.

The invention is, however, not limited to embodiments according to which the subscriber region or the extended subscriber region is a circle. Any shape of these regions is conceivable. For example the subscriber region and/or the extended subscriber region may have any geometric shape such as said circle, square, rectangle or polygon etc.

It is particularly preferred for the telecommunications system to be a mobile telephone system and for the first communications standard and/or the second communications standard and/or the further communications standard to be selected from the mobile telephone standards GSM, UMTS, GSM 900 and GSM 1800. Any other communications standard of a wireless network such as WLAN, WiMax is also conceivable.

In a further aspect of the method, the first communications standard is GSM and the second communications standard is UMTS. The aforesaid problem of the partial covering of the subscriber region by a different communications standard than the one for which the subscriber region was initially defined arises, for example, on the setting up of a UMTS network in regions in which there is already network coverage by GSM.

In a further aspect of the invention, provision is made for the finding whether, in regions in which the first region overlaps with the second region, the mobile device is being operated according to the second communications standard or according to a further communications standard to be made by the user or by the network operator.

Provision can furthermore be made for the case that a network operation according to the second communications standard is not possible in those regions in which the first region overlaps with the second region for the check to be made whether the mobile devices can be operated according to a further communications standard. If this is the case, the check in accordance with the invention is made using the further communications standard.

In a further aspect of the invention, provision is made for the method in accordance with the invention to be carried out for each circuit and/or packet switched traffic from/to the mobile device, such as a for voice call or for packet data. The billing unit or another unit of the telecommunications system can carry out the named checking steps during or after each circuit and/or packet switched traffic from/to the mobile device by the users who are located in the boundary region in which it is to be anticipated that radio cells of a new communications standard to be set up radiate into already defined subscriber regions. It is also conceivable that the checking steps are performed in the IDLE-Mode, i.e. before the traffic from/to the mobile device commences.

The result of the checking steps carried out can influence the billing of a circuit and/or packet switched traffic from/to the mobile device such as a telephone call with the mobile device and/or can influence any kind of service. Provision is alternatively or additionally made for the checking steps to have an influence on a display which is perceivable by the user and by means of which the user is advised whether he is in a subscriber region or not. It is preferred for the circuit and/or packet switched traffic from/to the mobile device to be billed at a comparatively favorable tariff or to enable or modify a service when it is found that the user is located inside the subscriber region.

The invention furthermore relates to a telecommunications system having means for the carrying out of a method in accordance with any one of the claims 1 to 14 using checking means for the carrying out of the checking steps of the method in accordance with the invention and using a first database in which local attributes are associated with the radio cells of the network and using a second database in which at least one subscriber region for a user of the telecommunications system is defined. Local attributes are to be understood as values or designations with reference to which a localization of the radio cells can be carried out. It is, for example, conceivable for coordinates to be associated with the radio cells by reference to which they can be identified, for example, in a Cartesian coordinate system. It is also conceivable that other designations (e.g. LAC/Cell ld) are assigned to the radio cells by means of which a determination is possible as to at which location the radio cell is located.

In a further aspect of the invention, a third database is provided in which it is laid down which communications standard (the first, the second or a further communications standard) is preferred in regions in which the first region overlaps with the second region. If, for example, a region is present in which an area supplied by UMTS radio cells overlaps with an area supplied by GSM cells, it can be laid down in the third database according to which standard (UMTS or GSM) the communication will be processed. This determination can take place with reference to the individual user or can be stored or can apply to all users of the telecommunications system.

Further details and advantages of the invention will be explained in more detail with reference to an embodiment shown in the drawing. There are shown:
Fig. 1: a flowchart of the method in accordance with the invention in a first embodiment;
Fig. 2: a flowchart of the method in accordance with the invention in a second embodiment
Figs. 3 - 5: schematic representations of the progressive network coverage of a UMTS network in a region covered by a GSM network.

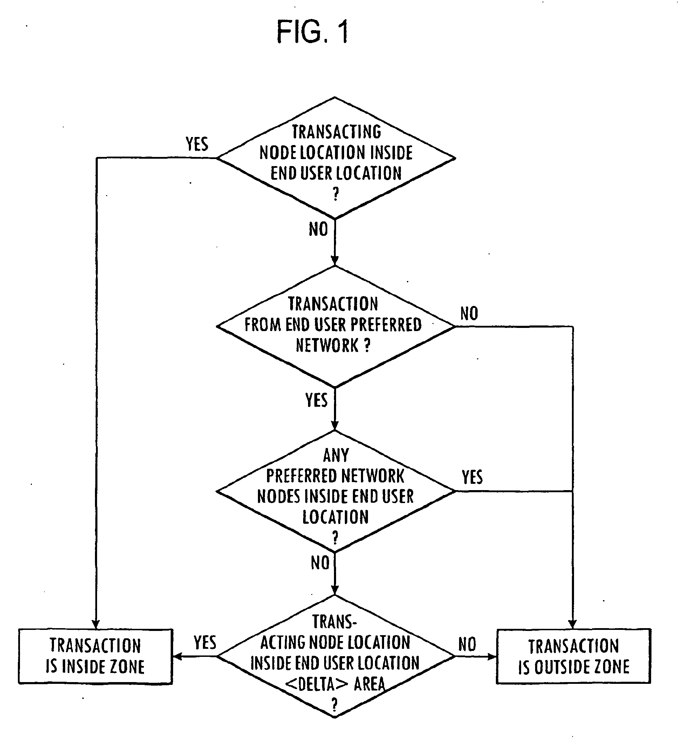

Figure 1 shows a flowchart of the method in accordance with the invention in a first embodiment.

In a first step, the check takes place whether the radio cell responsible for the communication is located inside a subscriber region, for example inside an area around the residence of the user designated as a home zone. If it is found that this is the case in the course of this check, the finding is made that the user is located inside his subscriber region. Further checking steps are not initiated in this case.

If, however, it is found in the first check that the radio cell responsible for the communication is located outside the subscriber region, the check follows whether the radio cell responsible for the communication is operating according to a communications standard preferred by the user, such as UMTS. If this is not the case, i.e. if the communication takes place according to the GSM standard, for example, the finding is made that the user is located outside his subscriber region.

If the radio cell responsible for the communication is operating according to a communications standard preferred by the user, the further examination follows whether radio cells operating according to this communications standard are located inside the subscriber region. If this is the case, the finding is made that the user is located outside his subscriber region. If the user were located inside his subscriber region and if radio cells operating according to a preferred communications standard were present there, the communication would take place via them and not via radio cells disposed outside.

If it is, however, found that no radio cells operating according to the preferred communications standard are located inside the subscriber region, the further check follows whether the cell responsible for the communication is located inside an extended subscriber region. This can include the subscriber region and project beyond it by a specific amount. It is, for example, conceivable that the subscriber region is formed by a circle having a first radius and that the extended subscriber region is formed by a concentric circle having a second radius which is larger than the first radius by a specific amount.

If it is found that the radio cell responsible for the communication is disposed inside the extended subscriber region, the assumption is made that the user is located inside his subscriber region and a corresponding billing takes place.

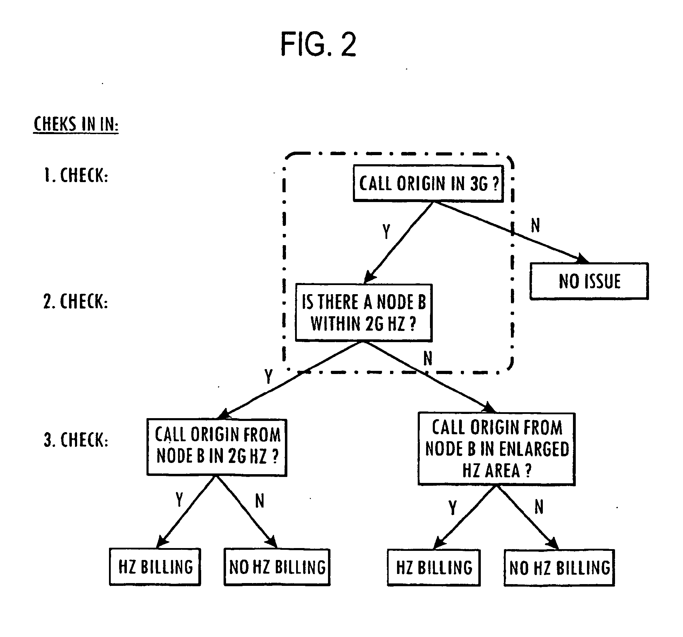

Figure 2 shows a flowchart of the method in accordance with the invention in a second embodiment.

The first checking step relates to the query whether the call to be billed is being made with the aforesaid second communications standard or with a further communications standard. If this is not the case, the method is ended. Nevertheless the user can be located within the subscriber area. If this is the case (i.e. the call is being made with the aforesaid second communications standard or with a further communications standard), however, the check follows whether a radio cell operating according to the second communications standard or to a further communications standard is located inside the subscriber region.

If this is the case, a check is made whether this radio cell is located inside the subscriber region. If so, it is found that the user is located inside a subscriber region. If not, the finding is made that the user is located outside his subscriber region.

If it is found in the aforesaid check that no radio cell operating according to the second communications standard or according to a further communications standard is located inside the subscriber region, a check is made whether the radio cell responsible for the communication is arranged inside an extended subscriber region. If this is the case, the billing is made according to the case that the user is located inside his subscriber region.

If it is found that the radio cell responsible for the communication is not arranged in the extended subscriber region, the finding is made that the subscriber is not located in his subscriber region.

For those cases in which it is found that the radio cell responsible for the communication is not located either inside the subscriber region or inside the extended subscriber region, a corresponding billing takes place with tariffs which are above those which are applied inside the subscriber region.

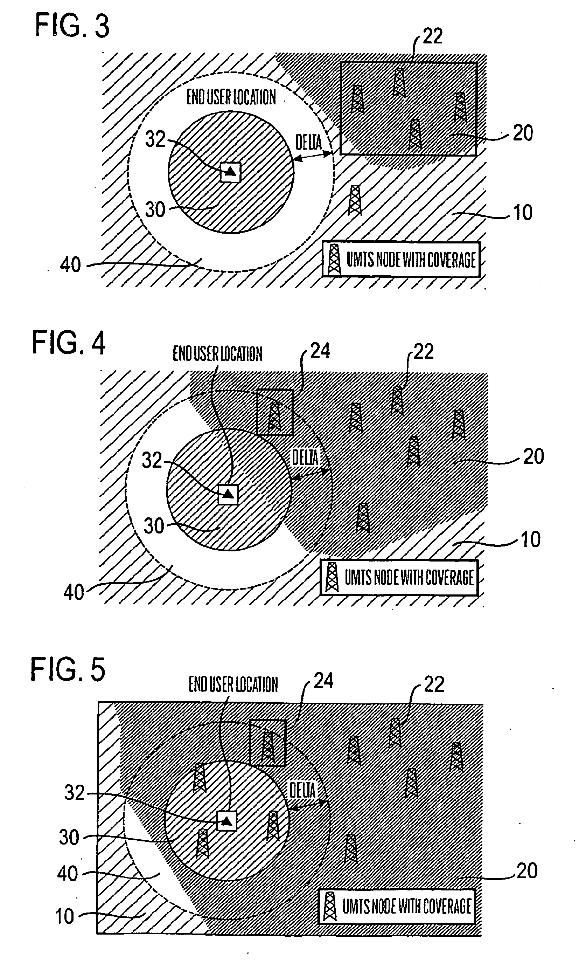

Figure 3 shows, in a schematic representation, a region 10 shown in light gray which is covered by GSM radio cells and a region 20 shown in dark gray which is covered by radio cells operating according to the UMTS standard. Reference numeral 22 designates a UMTS station by means of which a mobile device communicates with the mobile telephone network by UMTS. The circular area 30 with a gray background represents the subscriber region of the user which is likewise circular and the extended subscriber region comprising the region 30 is designated with the reference numeral 40. The extended subscriber region 40 has a radius which surpasses the radius of the subscriber region 30 by the amount "delta".

It is pointed out at this point that the subscriber region can be defined individually for the subscriber. Furthermore, two subscriber regions or more than two subscriber regions can be assigned to a subscriber.

The residence or another location representing the center of the subscriber region 30 or 40 is designated with 32.

If the GSM radio cell responsible for the communication from and to the mobile device or the corresponding transmitter and receiver station is located inside the subscriber region 30, the calls of the user are charged at a more favorable tariff than in the case that the GSM radio cell is located outside the subscriber region 30.

With reference to Fig. 1, the decision is taken in the uppermost of the checking steps shown, for the case that the communication is processed using a GSM radio cell which is located inside the subscriber region 30, that the user is located inside his subscriber region.

If the communication is processed using a GSM radio cell which is located outside the subscriber region 30, but inside the GSM region 10, a check is made in accordance with Fig. 1 whether the communication is taking place with a preferred communications standard, in this case by UMTS, for example. Since this does not apply in the example case named here, the user is located outside his subscriber region.

If, in the case shown in Fig. 3, the communication is processed using a UMTS radio cell which is located inside the region 20 and outside the region 30, a check is made in the bottommost of the check steps shown in Fig. 1 whether the UMTS cell is located inside the region 40, which is not the case in the case shown in Fig. 3 so that the decision is made that the user is located outside the subscriber region.

Fig. 4 shows a state of the telecommunications system in which the UMTS coverage has already progressed further. The UMTS radio cell designated with the reference numeral 24 is located inside the extended subscriber region 40, but outside the subscriber region 30.

As can be seen from the shape of the area 20, the UMTS coverage also extends into the subscriber region 30, but no UMTS radio cell, i.e. no UMTS station, is located in this area. If a user is located in this region, the communication does not take place by GSM, but by UMTS, which would bring along the disadvantage that the user would be billed at a tariff applicable outside the subscriber region 30 due to the radio cell 24 per se being outside the subscriber region 30 although the user is located inside the subscriber region 30. To avoid this state, provision is made in accordance with the invention for a check to be made in the last of the checking steps shown in Fig. 1 whether the UMTS radio cell 24 is disposed inside the extended subscriber region 40, which is to be affirmed in the state shown in Fig. 4. The decision is accordingly made that the user is located inside the subscriber region 30 and a corresponding billing takes place.

Fig. 5 shows the case of the further progressed UMTS coverage which in particular differs from that shown in Fig. 4 in that now UMTS cells are also located inside the subscriber region 30. When the test pattern shown in Fig. 1 is run through, it is ensured that the user is only evaluated as being in the subscriber region 30 when the UMTS radio cell responsible for the transmission is located inside the subscriber region.

## Claims

1. A method of operating a telecommunications system which comprises radio cells for the wireless communication of the users of the telecommunications network by means of mobile devices and in which a first area exists which is covered by radio cells which are operated according to a first communications standard and in which a second area exists which is covered by radio cells which are operated according to a second communications standard or according to a further communications standard, wherein at least one subscriber region (30) is defined in the first area for at least one user of the telecommunications system in which the user can use the telecommunications system at different conditions than outside the subscriber region (30),
wherein the method is designed such that it comprises a first check whether the radio cell responsible for the communication is located inside the subscriber region (30) and, if the result is positive, makes the finding that the user is located inside the subscriber region (30)
and, if the result of the first check is negative, provides for a second check whether the radio cell responsible for the communication operates according to the second communications standard or according to a further communications standard, if the result of the second check is negative, makes the finding that the user is located outside the subscriber region (30) and, if the result of the second check is positive, provides for a third check whether a radio cell operating according to the second communications standard or according to a further communications standard is present inside the subscriber region (30) and, if the result of the check is positive, makes the finding that the user is located outside the subscriber region (30) and, if the result of the third check is negative, provides for a fourth check whether the radio cell responsible for the communication is located inside an extended subscriber region (40) which has a larger extent than the subscriber region (30) at least in part and, if the result of the fourth check is positive, makes the finding that the user is located inside the subscriber region (30).

2. A method in accordance with claim 1, wherein a checking step is provided prior to the first check whether the call by means of the mobile device is taking place according to the first or second communications standards or according to the further communications standard and no further check is made if it is found that the call is taking place by means of the first communications standard.

3. A method of operating a telecommunications system which comprises radio cells for the wireless communication of the users of the telecommunications network by means of mobile devices and in which a first area exists which is covered by radio cells which are operated according to a first communications standard and in which a second area exists which is covered by radio cells which are operated according to a second communications standard or according to a further communications standard, wherein at least one subscriber region (30) is defined in the first area for at least one user of the telecommunications system in which the user can use the telecommunications system at different conditions than outside the subscriber region (30),
wherein the method is designed such that it comprises a first check whether the radio cell responsible for the communication is a radio cell operating according to the second communications standard or according to the further communications standard and does not instigate any further checking steps if this is not the case; and, if the result of the first check is positive, provides for a second check whether a radio cell is located inside the subscriber region (30) which operates according to the second communications standard or according to the further communications standard
and, if the result of the second check is positive, provides for a third check whether the radio cell responsible for the communication is located inside the subscriber region (30) and, if the check is positive, makes the finding that the subscriber is located inside the subscriber region (30) and, if the check is negative, makes the finding that the subscriber is located outside the subscriber region (30) and, if the result of the second check is negative, provides for a fourth check whether the radio cell responsible for the communication is located inside an extended subscriber region (40) which has a larger extent than the subscriber region (30) at least in part and, if the check is positive, makes the finding that the subscriber is located inside the subscriber region (30) and, if the check is negative, makes the finding that the subscriber is located outside the subscriber region (30).

4. A method in accordance with claim 3, wherein the third and the fourth checks are carried out simultaneously or the third check is made before the fourth or the fourth check is made before the third.

5. A method in accordance with any one of the preceding claims, wherein the extended subscriber region (40) is larger than the subscriber region (30) by a fixed or non-fixed amount.

6. A method in accordance with any one of the preceding claims, wherein the subscriber region (30) is defined by a circle which has the radius r and a specific location inside the first region as the center of the circle and the extended subscriber region (40) is likewise defined by a circle which has the same location as the subscriber region (30) and a radius R which is larger than the radius r of the subscriber region (30) by a fixed amount.

7. A method in accordance with any one of the preceding claims, wherein the subscriber region (30) is defined by any kind of a geometric shape, such as a circle, square, rectangle or polygon.

8. A method in accordance with any one of the preceding claims, wherein the first and/or second communications standards and/or the further communications standard are selected from a mobile telephone standard, in particular GSM, UMTS, GSM 900 and GSM 1800, or from another communications standard of a wireless communications technology, in particular WLAN or WiMax.

9. A method in accordance with any one of the preceding claims, wherein the first communications standard is GSM and the second communications standard is UMTS.

10. A method in accordance with any one of the preceding claims, wherein a finding is made by the user or by the network operator in regions in which the first area overlaps with the second area that the mobile device is operated according to the second communications standard or according to a further communications standard.

11. A method in accordance with any one of the preceding claims, wherein, for the case that a network operation according to the second communications standard is not possible in those regions in which the first region overlaps with the second region, the check is made whether the mobile devices can be operated according to a further communications standard.

12. A method in accordance with any one of the preceding claims, wherein the method is carried out for every circuit and/or packet switched traffic from and/or to the mobile device.

13. A method in accordance with any one of the preceding claims, wherein the result of the checks of the method influences the billing of and/or or a service with regard to a circuit and/or packet switched traffic from and/or to the mobile device.

14. A method in accordance with any one of the preceding claims, wherein the circuit and/or packet switched traffic from and/or to the mobile device is billed at a more favorable tariff and/or a service is enabled or changed when it is found that the user is located inside the subscriber region (30) than when this is not the case.

15. A telecommunications system having means for the carrying out of a method in accordance with any one of the claims 1 to 14 using checking means for the carrying out of the checking steps of the method in accordance with the invention and using a first database in which local attributes are associated with the radio cells of the network and using a second database in which at least one subscriber region (30) for a user of the telecommunications system is defined.

16. A telecommunications system in accordance with claim 15, wherein a third database is provided in which it is laid down which communications standard is preferred in regions in which the first area overlaps with the second area.

## Patentansprüche

1. Verfahren zum Betreiben eines Telekommunikationssystems, das Funkzellen zur drahtlosen Kommunikation der Nutzer des Telekommunikationsnetzes mittels mobiler Endgeräte umfasst und in dem ein erster Bereich existiert, der von Funkzellen abgedeckt wird, die nach einem ersten Kommunikationsstandard betrieben werden, und in dem ein zweiter Bereich existiert, der von Funkzellen abgedeckt wird, die nach einem zweiten Kommunikationsstandard oder einem weiteren Kommunikationsstandard betrieben werden, wobei in dem ersten Bereich für wenigstens einen Nutzer des Telekommunikationssystems wenigstens ein Teilnehmergebiet (30) definiert ist, in dem der Nutzer das Telekommunikationssystem zu anderen Konditionen nutzen kann als außerhalb des Teilnehmergebietes (30),
wobei das Verfahren so ausgelegt ist, dass es eine erste Prüfung umfasst, ob sich die für die Kommunikation zuständige Funkzelle innerhalb des Teilnehmergebietes (30) befindet, und, wenn das Ergebnis positiv ist, die Feststellung trifft, dass sich der Nutzer innerhalb des Teilnehmergebietes (30) befindet,
und, wenn das Ergebnis der ersten Prüfung negativ ist, eine zweite Prüfung vorsieht, ob die für die Kommunikation zuständige Funkzelle nach dem zweiten Kommunikationsstandard oder nach einem weiteren Kommunikationsstandard arbeitet, wenn das Ergebnis der zweiten Prüfung negativ ist, die Feststellung trifft, dass sich der Nutzer außerhalb des Teilnehmergebietes (30) befindet, und, wenn das Ergebnis der zweiten Prüfung positiv ist, eine dritte Prüfung vorsieht, ob eine Funkzelle, die nach dem zweiten Kommunikationsstandard oder nach einem weiteren Kommunikationsstandard arbeitet, innerhalb des Teilnehmergebietes (30) vorhanden ist, und, wenn das Ergebnis der Prüfung positiv ist, die Feststellung trifft, dass sich der Nutzer außerhalb des Teilnehmergebiets (30) befindet, und, wenn das Ergebnis der dritten Prüfung negativ ist, eine vierte Prüfung vorsieht, ob sich die Funkzelle, die für die Kommunikation zuständig ist, in einem erweiterten Teilnehmergebiet (40) befindet, das zumindest teilweise eine größere Ausdehnung als das Teilnehmergebiet (30) aufweist, und, wenn das Ergebnis der vierten Prüfung positiv ist, die Feststellung trifft, dass sich der Nutzer innerhalb des Teilnehmergebietes (30) befindet.

2. Verfahren nach Anspruch 1, wobei vor der ersten Prüfung ein Prüfschritt vorgesehen ist, ob das Gespräch mittels des mobilen Endgeräts nach dem ersten oder zweiten Kommunikationsstandard oder nach dem weiteren Kommunikationsstandard erfolgt, und keine weitere Prüfung vorgenommen wird, wenn festgestellt wird, dass das Gespräch mittels des ersten Kommunikationsstandards erfolgt.

3. Verfahren zum Betreiben eines Telekommunikationssystems, das Funkzellen für die drahtlose Kommunikation der Nutzer des Telekommunikationsnetzes mittels mobiler Endgeräte umfasst und in dem ein erster Bereich existiert, der von Funkzellen abgedeckt wird, die nach einem ersten Kommunikationsstandard betrieben werden, und in dem ein zweiter Bereich existiert, der durch Funkzellen abgedeckt ist, die nach einem zweiten Kommunikationsstandard oder nach einem weiteren Kommunikationsstandard betrieben werden, wobei mindestens ein Teilnehmergebiet (30) in dem ersten Bereich für mindestens einen Nutzer des Telekommunikationssystems festgelegt ist, in dem der Nutzer das Telekommunikationssystem zu anderen Bedingungen als außerhalb des Teilnehmergebiets (30) nutzen kann,
wobei das Verfahren derart ausgestaltet ist, dass es eine erste Prüfung umfasst, ob die für die Kommunikation zuständige Funkzelle eine Funkzelle ist, die nach dem zweiten Kommunikationsstandard oder nach dem weiteren Kommunikationsstandard arbeitet, und keine weiteren Prüfschritte einleitet, wenn dies nicht der Fall ist; und, wenn das Ergebnis der ersten Prüfung positiv ist, eine zweite Prüfung vorsieht, ob sich eine Funkzelle innerhalb des Teilnehmergebietes (30) befindet, die nach dem zweiten Kommunikationsstandard oder nach dem weiteren Kommunikationsstandard arbeitet,
und, wenn das Ergebnis der zweiten Prüfung positiv ist, eine dritte Prüfung vorsieht, ob sich die für die Kommunikation zuständige Funkzelle innerhalb des Teilnehmergebietes (30) befindet und, wenn die Prüfung positiv ist, die Feststellung trifft, dass sich der Teilnehmer innerhalb des Teilnehmergebietes (30) befindet, und, wenn die Prüfung negativ ist, die Feststellung trifft, dass sich der Teilnehmer außerhalb des Teilnehmergebiets (30) befindet, und, wenn das Ergebnis der zweiten Prüfung negativ ist, eine vierte Prüfung vorsieht, ob sich die für die Kommunikation zuständige Funkzelle innerhalb eines erweiterten Teilnehmergebietes (40) befindet, das zumindest teilweise eine größere Ausdehnung als das Teilnehmergebiet (30) aufweist, und, wenn die Prüfung positiv ist, die Feststellung trifft, dass sich der Teilnehmer innerhalb des Teilnehmergebietes (30) befindet, und, wenn die Prüfung negativ ist, die Feststellung trifft, dass sich der Teilnehmer außerhalb des Teilnehmergebietes (30) befindet.

4. Verfahren nach Anspruch 3, wobei die dritte und die vierte Prüfung zeitgleich ausgeführt werden oder die dritte vor der vierten Prüfung oder die vierte vor der dritten Prüfung vorgenommen werden.

5. Verfahren nach einem der vorhergehenden Ansprüche, wobei das erweiterte Teilnehmergebiet (40) um einen festgelegten oder nicht festgelegten Betrag größer ist als das Teilnehmergebiet (30).

6. Verfahren nach einem der vorhergehenden Ansprüche, wobei das Teilnehmergebiet (30) durch einen Kreis definiert ist, der den Radius r und als Kreismittelpunkt einen bestimmten Ortspunkt innerhalb des ersten Bereiches aufweist, und das erweiterte Teilnehmergebiet (40) ebenfalls durch einen Kreis definiert ist, der denselben Ortspunkt wie das Teilnehmergebiet (30) und einen Radius R aufweist, der um einen festgelegten Betrag größer ist als der Radius r des Teilnehmergebietes (30).

7. Verfahren nach einem der vorhergehenden Ansprüche, wobei das Teilnehmergebiet (30) durch eine beliebige geometrische Form, wie etwa einen Kreis, ein Quadrat, ein Rechteck oder ein Vieleck, festgelegt ist.

8. Verfahren nach einem der vorhergehenden Ansprüche, wobei der erste und/oder zweite Kommunikationsstandard und/oder der weitere Kommunikationsstandard aus einem Mobilfunkstandard, insbesondere GSM, UMTS, GSM 900 und GSM 1800, oder aus einem anderen Kommunikationsstandard einer drahtlosen Kommunikationstechnik, insbesondere WLAN oder WiMax, ausgewählt sind.

9. Verfahren nach einem der vorhergehenden Ansprüche, wobei es sich bei dem ersten Kommunikationsstandard um GSM und bei dem zweiten Kommunikationsstandard um UMTS handelt.

10. Verfahren nach einem der vorhergehenden Ansprüche, wobei in Gebieten, in denen sich der erste mit dem zweiten Bereich überschneidet, durch den Nutzer oder durch den Netzbetreiber eine Festlegung getroffen wird, dass das mobile Endgerät nach dem zweiten Kommunikationsstandard oder einem weiteren Kommunikationsstandard betrieben wird.

11. Verfahren nach einem der vorhergehenden Ansprüche, wobei für den Fall, dass in den Gebieten, in denen sich der erste mit dem zweiten Bereich überschneidet, ein Netzbetrieb nach dem zweiten Kommunikationsstandard nicht möglich ist, die Prüfung erfolgt, ob die mobilen Endgeräte nach einem weiteren Kommunikationsstandard betrieben werden können.

12. Verfahren nach einem der vorgehenden Ansprüche, wobei das Verfahren für jede Verbindung und/oder paketvermittelte Übertragung von und/oder zu dem mobilen Endgerät durchgeführt wird.

13. Verfahren nach einem der vorgehenden Ansprüche, wobei das Ergebnis der Prüfungen des Verfahrens die Vergebührung einer Verbindung und/oder paketvermittelten Übertragung von und/oder zu dem mobilen Endgerät und/oder einen Dienst bezüglich der Verbindung und/oder paketvermittelten Übertragung beeinflusst.

14. Verfahren nach einem der vorhergehenden Ansprüche, wobei die Verbindung und/oder paketvermittelte Übertragung von und/oder zu dem mobilen Endgerät zu einem günstigeren Tarif vergebührt wird und/oder ein Dienst ermöglicht oder geändert wird, wenn festgestellt wird, dass sich der Nutzer innerhalb des Teilnehmergebietes (30) befindet, als wenn dies nicht der Fall ist.

15. Telekommunikationssystem mit Mitteln zur Durchführung eines Verfahrens gemäß einem der Ansprüche 1 bis 14 unter Verwenden von Prüfmitteln zur Durchführung der Prüfungsschritte des erfindungsgemäßen Verfahrens sowie unter Verwenden einer ersten Datenbank, in der den Funkzellen des Netzes Ortsattribute zugeordnet sind, und unter Verwenden einer zweiten Datenbank, in der wenigstens ein Teilnehmergebiet (30) für einen Nutzer des Telekommunikationssystems definiert ist.

16. Telekommunikationssystem nach Anspruch 15, wobei eine dritte Datenbank vorgesehen ist, in der festgelegt ist, welcher Kommunikationsstandard in Gebieten bevorzugt ist, in denen sich der erste mit dem zweiten Bereich überschneidet.

## Revendications

1. Procédé d'exploitation d'un système de télécommunications qui comprend des cellules radio pour la communication sans fil des utilisateurs du réseau de télécommunications au moyen de dispositifs mobiles et dans lequel il y a une première zone qui est couverte par des cellules radio qui sont exploitées selon un premier standard de communication et dans lequel il y a une seconde zone qui est couverte par des cellules radio qui sont exploitées selon un second standard de communication ou selon un autre standard de communication, au moins une région d'abonné (30) étant définie dans la première zone pour au moins un utilisateur du système de télécommunications dans laquelle l'utilisateur peut utiliser le système de télécommunications à des conditions différentes qu'à l'extérieur de la région d'abonné (30),
le procédé étant conçu de telle sorte qu'il comprend une première vérification visant à déterminer si la cellule radio responsable pour la communication est située à l'intérieur de la région d'abonné (30) et que, si le résultat est positif, il conclut que l'utilisateur est situé à l'intérieur de la région d'abonné (30)
et que, si le résultat de la première vérification est négatif, il prévoit une seconde vérification visant à déterminer si la cellule radio responsable pour la communication fonctionne selon le second standard de communication ou selon un autre standard de communication, si le résultat de la seconde vérification est négatif, il conclut que l'utilisateur est situé à l'extérieur de la région d'abonné (30) et, si le résultat de la seconde vérification est positif, il prévoit une troisième vérification visant à déterminer si une cellule radio fonctionnant selon le second standard de communication ou selon un autre standard de communication est présente à l'intérieur de la région d'abonné (30) et, si le résultat de la vérification est positif, il conclut que l'utilisateur est situé à l'extérieur de la région d'abonné (30) et, si le résultat de la troisième vérification est négatif, il prévoit une quatrième vérification visant à déterminer si la cellule radio responsable pour la communication est située à l'intérieur d'une région d'abonné étendue (40) qui présente une étendue supérieure à la région d'abonné (30) au moins en partie et, si le résultat de la quatrième vérification est positif, il conclut que l'utilisateur est situé à l'intérieur de la région d'abonné (30).

2. Procédé selon la revendication 1, dans lequel une étape de vérification est prévue avant la première vérification visant à déterminer si l'appel au moyen du dispositif mobile a lieu selon le premier ou le second standard de communication ou selon l'autre standard de communication et aucune autre vérification n'est faite si le résultat est que l'appel a lieu au moyen du premier standard de communication.

3. Procédé d'exploitation d'un système de télécommunications qui comprend des cellules radio pour la communication sans fil des utilisateurs du réseau de télécommunications au moyen de dispositifs mobiles et dans lequel il y a une première zone qui est couverte par des cellules radio qui sont exploitées selon un premier standard de communication et dans lequel il y a une seconde zone qui est couverte par des cellules radio qui sont exploitées selon un second standard de communication ou selon un autre standard de communication, au moins une région d'abonné (30) étant définie dans la première zone pour au moins un utilisateur du système de télécommunications dans laquelle l'utilisateur peut utiliser le système de télécommunications à des conditions différentes qu'à l'extérieur de la région d'abonné (30),
le procédé étant conçu de telle sorte qu'il comprend une première vérification visant à déterminer si la cellule radio responsable pour la communication est une cellule radio fonctionnant selon le second standard de communication ou selon l'autre standard de communication et qu'il ne provoque pas d'autres étapes de vérification si cela n'est pas le cas ; et que, si le résultat de la première vérification est positif, il prévoit une seconde vérification visant à déterminer si une cellule radio est située à l'intérieur de la région d'abonné (30) qui fonctionne selon le second standard de communication ou selon l'autre standard de communication
et que, si le résultat de la seconde vérification est positif, il prévoit une troisième vérification visant à déterminer si la cellule radio responsable pour la communication est située à l'intérieur de la région d'abonné (30) et, si la vérification est positive, il conclut que l'abonné est situé à l'intérieur de la région d'abonné (30) et, si la vérification est négative, il conclut que l'abonné est situé à l'extérieur de la région d'abonné (30) et, si le résultat de la seconde vérification est négatif, il prévoit une quatrième vérification visant à déterminer si la cellule radio responsable pour la communication est située à l'intérieur d'une région d'abonné étendue (40) qui présente une étendue supérieure à la région d'abonné (30) au moins en partie et, si la vérification est positive, il conclut que l'abonné est situé à l'intérieur de la région d'abonné (30) et, si la vérification est négative, il conclut que l'abonné est situé à l'extérieur de la région d'abonné (30).

4. Procédé selon la revendication 3, dans lequel la troisième et la quatrième vérification sont exécutées simultanément ou la troisième vérification est faite avant la quatrième ou la quatrième vérification est faite avant la troisième.

5. Procédé selon l'une quelconque des revendications précédentes, dans lequel la région d'abonné étendue (40) est plus grande d'une quantité fixée ou non fixée que la région d'abonné (30).

6. Procédé selon l'une quelconque des revendications précédentes, dans lequel la région d'abonné (30) est définie par un cercle qui présente le rayon r et un emplacement spécifique à l'intérieur de la première région en tant que centre du cercle et la région d'abonné étendue (40) est définie de même par un cercle qui présente le même emplacement que la région d'abonné (30) et un rayon R qui est plus grand d'une quantité fixée que le rayon r de la région d'abonné (30).

7. Procédé selon l'une quelconque des revendications précédentes, dans lequel la région d'abonné (30) est définie par un quelconque type de forme géométrique, telle qu'un cercle, un carré, un rectangle ou un polygone.

8. Procédé selon l'une quelconque des revendications précédentes, dans lequel le premier et/ou le second standard de communication et/ou l'autre standard de communication sont choisis parmi des standards de téléphonie mobile, en particulier GSM, UMTS, GSM 900 et GSM 1800, ou d'autres standards de communication d'une technologie de communication sans fil, en particulier WLAN ou WiMax.

9. Procédé selon l'une quelconque des revendications précédentes, dans lequel le premier standard de communication est le GSM et le second standard de communication est l'UMTS.

10. Procédé selon l'une quelconque des revendications précédentes, dans lequel l'utilisateur ou l'opérateur du réseau dans des régions dans lesquelles la première zone chevauche la seconde zone conclut que le dispositif mobile est exploité selon le second standard de communication ou selon un autre standard de communication.

11. Procédé selon l'une quelconque des revendications précédentes, dans lequel, dans le cas où une exploitation de réseau selon le second standard de communication n'est pas possible dans les régions dans lesquelles la première région chevauche la seconde région, la vérification visant à déterminer si les dispositifs mobiles peuvent être exploités selon un autre standard de communication est effectuée.

12. Procédé selon l'une quelconque des revendications précédentes, dans lequel le procédé est exécuté pour chaque trafic à commutation de circuits et/ou de paquets depuis et/ou vers le dispositif mobile.

13. Procédé selon l'une quelconque des revendications précédentes, dans lequel le résultat des vérifications du procédé influence la facturation et/ou un service par rapport à un trafic à commutation de circuits et/ou de paquets depuis et/ou vers le dispositif mobile.

14. Procédé selon l'une quelconque des revendications précédentes, dans lequel le trafic à commutation de circuits et/ou de paquets depuis et/ou vers le dispositif mobile est facturé à un tarif plus avantageux et/ou un service est autorisé ou modifié quand la conclusion est que l'utilisateur est situé à l'intérieur de la région d'abonné (30) par rapport à quand cela n'est pas le cas.

15. Système de télécommunications présentant des moyens pour exécuter un procédé selon l'une quelconque des revendications 1 à 14 en utilisant des moyens de vérification pour l'exécution des étapes de vérification du procédé selon l'invention et en utilisant une première base de données dans laquelle des attributs locaux sont associés aux cellules radio du réseau et en utilisant une seconde base de données dans laquelle au moins une région d'abonné (30) pour un utilisateur du système de télécommunications est définie.

16. Système de télécommunications selon la revendication 15, dans lequel une troisième base de données est prévue, dans laquelle est stipulé quel standard de communication est préféré dans des régions dans lesquelles la première zone chevauche la seconde zone.
